# EUROPÄISCHE PATENTSCHRIFT

(11) **EP 3 497 055 B1**
(45) Veröffentlichungstag und Bekanntmachung des Hinweises auf die Patenterteilung: **16.03.2022**
(21) Anmeldenummer: 16758101.6
(22) Anmeldetag: 11.08.2016
(51) Int. Cl.: C01B 33/02, C01B 32/00, H01M 4/134, H01M 4/36, H01M 4/38, H01M 4/04, H01M 4/62

(54) **HERSTELLUNG VON SI/C-PRÄKOMPOSITPARTIKELN**
PRODUCTION OF SI/C PRECOMPOSITE PARTICLES
PRÉPARATION DE PARTICULES PRECOMPOSITES DE SI/C

(43) Veröffentlichungstag der Anmeldung: 19.06.2019
(73) Patentinhaber: Wacker Chemie AG, 81737 München (DE)
(72) Erfinder: TROEGEL, Dennis, 91242 Ottensoos (DE); PANTELIC-SEIDL, Jelena, 82110 Germering (DE)
(74) Vertreter: Ege, Markus
(86) Internationale Anmeldenummer: PCT/EP2016/069147
(87) Internationale Veröffentlichungsnummer: WO 2018/028790

(56) Entgegenhaltungen:
- EP-A1- 2 782 167
- EP-A1- 3 035 418
- DATTA M K ET AL: "In situ electrochemical synthesis of lithiated silicon-carbon based composites anode materials for lithium ion batteries", JOURNAL OF POWER SOURCES, ELSEVIER SA, CH, Bd. 194, Nr. 2, 1. Dezember 2009 (2009-12-01), Seiten 1043-1052, XP026499697, ISSN: 0378-7753, DOI: 10.1016/J.JPOWSOUR.2009.06.033 [gefunden am 2009-06-21]
- JUCHEN GUO ET AL: "Cyclability study of siliconcarbon composite anodes for lithium-ion batteries using electrochemical impedance spectroscopy", ELECTROCHIMICA ACTA, ELSEVIER SCIENCE PUBLISHERS, BARKING, GB, Bd. 56, Nr. 11, 4. Februar 2011 (2011-02-04), Seiten 3981-3987, XP028480540, ISSN: 0013-4686, DOI: 10.1016/J.ELECTACTA.2011.02.014 [gefunden am 2011-02-18]
- MADHURI THAKUR ET AL: "Inexpensive method for producing macroporous silicon particulates (MPSPs) with pyrolyzed polyacrylonitrile for lithium ion batteries", SCIENTIFIC REPORTS, Bd. 2, 8. November 2012 (2012-11-08), XP055170815, DOI: 10.1038/srep00795

## Beschreibung

Die Erfindung betrifft Verfahren zur Herstellung von Präkompositpartikeln auf Basis von Siliciumpartikeln, Polyacrylnitril und Kohlenstoff-Additiven.

Wiederaufladbare Lithium-Ionen-Batterien sind momentan die kommerziell verfügbaren elektrochemischen Energiespeicher mit den höchsten Energiedichten von bis zu 250 Wh/kg. Sie werden vor allem im Bereich der tragbaren Elektronik, für Werkzeuge und auch für Transportmittel, wie beispielsweise Fahrräder oder Automobile, genutzt. Insbesondere für die Anwendung in Automobilen ist es jedoch notwendig, die Energiedichte der Batterien weiter deutlich zu steigern, um höhere Reichweiten der Fahrzeuge zu erreichen.

Als negatives Elektrodenmaterial ("Anode") wird in der Praxis gegenwärtig vor allem graphitischer Kohlenstoff verwendet. Graphitischer Kohlenstoff zeichnet sich durch seine stabilen Zykleneigenschaften und seine, im Vergleich zu Lithiummetall, das in Lithium-Primärzellen verwendet wird, recht hohe Handhabungssicherheit aus. So erfährt graphitischer Kohlenstoff bei der Ein- und Auslagerung von Lithium nur geringe Volumenänderungen, beispielsweise im Bereich von 10% für die Grenzstöchiometrie von LiC₆. Nachteilig ist jedoch seine relativ niedrige elektrochemische Kapazität von theoretisch 372 mAh/g, die nur etwa ein Zehntel der mit Lithiummetall theoretisch erreichbaren elektrochemischen Kapazität entspricht.

Dagegen besitzt Silicium mit 4199 mAh/g die höchste bekannte Speicherkapazität für Lithium-Ionen. Nachteiligerweise erleiden Silicium enthaltende Elektrodenaktivmaterialien beim Laden bzw. Entladen mit Lithium extreme Volumenänderungen von bis ca.

300%. Durch diese Volumenänderung kommt es zu einer starken mechanischen Beanspruchung des Aktivmaterials und der gesamten Elektrodenstruktur, die durch elektrochemisches Mahlen zu einem Verlust der elektrischen Kontaktierung und damit zur Zerstörung der Elektrode unter Kapazitätsverlust führt. Weiterhin reagiert die Oberfläche des eingesetzten Silicium-Anodenmaterials mit Bestandteilen des Elektrolyten unter kontinuierlicher Bildung passivierender Schutzschichten (Solid Electrolyte Interface; SEI), was zu einem irreversiblen Verlust an mobilem Lithium führt.

Um die Probleme im Zusammenhang mit der starken Volumenausdehnung des Aktivmaterials und der SEI-Bildung in Si-haltigen Anoden zu lösen, wurden in den letzten Jahren verschiedene Ansätze zur elektrochemischen Stabilisierung Si-haltiger Elektrodenaktivmaterialien verfolgt, wie beispielsweise beschrieben von A. J. Appleby in J. Power Sources 2007, 163, Seiten 1003 bis 1039. Vielfach wird Silicium-haltiges Aktivmaterial in Kombination mit Kohlenstoff eingesetzt. In einem Ansatz wird das Si-haltige Aktivmaterial in Form einer physikalischen Mischung mit Graphit in die Elektrodenbeschichtung eingesetzt, wie in EP 1730800 B1 gelehrt. In einem anderen Ansatz werden die beiden Elemente Silicium und Kohlenstoff strukturell zu einem Komposit-Material verbunden, wie in einem Übersichtsartikel von M. Rossi in J. Power Sources 2014, 246, Seiten 167 bis 177 zusammengefasst.

Für die Verarbeitung sowie die elektrochemische Performance solcher Partikel hat deren Partikelstruktur und Partikelgröße entscheidende Bedeutung. So werden sphärische Mikropartikel auf Basis von Silicium und leitfähigem Kohlenstoff gewünscht, da diese aufgrund ihrer kugelförmigen Struktur die isotrope Volumenausdehnung von Silicium in alle Raumrichtungen gleichmäßiger als nicht sphärische Partikel abpuffern können.

Die Herstellung von sphärischen, mikroskaligen Si/C-Komposit-partikeln erfolgt in etablierter Weise über einen Sprühtrocknungsschritt. Dazu werden Dispersionen von Siliciumpartikeln, Kohlenstoff-Precursoren (beispielsweise Zucker oder Pech) und gegebenenfalls weiteren Kohlenstoff-haltigen Additiven zu Tröpfchen versprüht, die im Zuge der Trocknung ihre Tropfenform und Tropfengröße bewahren und auf diese Weise sphärische Präkompositpartikel bilden. Anschließende Carbonisierung der Kohlenstoff-Precursoren überführt die Präkompositpartikel in Si-/C-Kompositpartikel. Ein entsprechendes Verfahren ist beispielsweise in der US 2011165468 beschrieben. Die Sprühtrocknungsverfahren von B. Li führen zu Kompositpartikeln, die im Inneren ein poröses Geflecht aus Kohlenstoff und Si-Nanopartikeln beinhalten (Electrochem. Comm. 2014, 49, 98). F. Su (RSC Adv. 2014, 4, Seiten 43114 bis 43120) beschreibt einen analogen Ansatz unter Einsatz von Leitruß, nano-Silicium und Saccharose. X. Hou (J. Power Sources 2014, 248, Seiten 721 bis 728) beschreibt ein zweistufiges Verfahren zur Herstellung von Si-/C-Kompositpartikeln, in dem zuerst nano-Silicium zusammen mit Graphit und Citronensäure als C-Precursor sprühgetrocknet werden. Die Trocknungsprodukte wurden nach Temperaturbehandlung mit Pech beschichtet, anschließend einer Sprühtrocknung und schließlich einer Pyrolyse unterworfen. Datta et al., Journal of Power Sources, Elsevier SA, CH, Vol. 194, No. 2, 1. Dezember 2009, Seiten 1043-1052 stellen Si/C-Kompositpartikel her, indem zunächst Siliciumpartikel, Polyacrylnitril und Graphit im Lösungsmittel N-Methylpyrrolidon (NMP) gemischt werden, das so erhaltene Produkt anschließend in gemahlenes Pulver überführt und schließlich bei 1073 K thermisches behandelt wird.

Nachteiliger Weise erfordern Sprühtrocknungsprozesse den Einsatz erheblicher Mengen an Lösungsmitteln, häufig organischen Lösungsmitteln, welche während des Sprühvorgangs energieaufwändig verdampft und nach Abtrennung des Produkts wieder kondensiert werden. Lösungsmittel und Sprühgas müssen dann wieder aufwändig getrennt und zurückgeführt werden. Zudem werden für die Zerstäubung von organischen Lösungsmitteln enthaltenden Dispersionen inerte Sprühgases, wie Stickstoff oder Argon, benötigt, was ein weiterer Kostenfaktor ist.

Bei gängigen Sprühtrocknungsverfahren besteht auch das Problem, dass während der Sprühtrocknung unterschiedliche Partikel miteinander verkleben beziehungsweise verwachsen und dadurch aggregierte Partikel, auch Sekundärpartikel genannt, bilden. Eine weitere Aggregierung von Partikeln kann bei der Carbonisierung herkömmlicher Sprühtrocknungsprodukte durch Versinterung unterschiedlicher Partikel auftreten. Als Ergebnis resultieren Si/C-Kompositpartikel, die keine sphärische Struktur mehr haben sowie erhebliche Anteile an Grobpartikeln enthalten und eine breite Partikelgrößenverteilung aufweisen, was für deren Weiterverarbeitung als Anodenaktivmaterial für Lithium-Ionen-Batterien nachteilig ist.

Aus diesen Gründen besteht Bedarf an Verfahren, die ohne Einsatz von Lösungsmitteln zu geeigneten Si/C-Kompositpartikeln für Anodenaktivmaterialien führen. Hierzu sind Trockenmischprozesse diskutiert worden, in denen Siliciumpartikel mit weiteren Komponenten in trockener Form vermischt oder vermahlen und anschließend durch thermische Carbonisierung in Si/C-Komposite überführt werden.

Beispielsweise beschreibt die US8999581 die Herstellung von Si/G/C-Partikeln, indem zunächst Metalle oder Halbmetalle, wie beispielsweise Silicium, und Graphit (G) mittels einer Rotormühle in assemblierte (Halb)Metall/Graphit-Sphären überführt werden, die assemblierten (Halb)Metall/Graphit-Sphären anschließend mit Pech-basiertem amorphem Kohlenstoff beschichtet werden und das so erhaltene Zwischenprodukt schließlich carbonisiert wird. Ein solches mehrstufiges Misch- und Beschichtungsverfahren ist aufwändig. Zudem sind konkret nur Verfahren unter Einsatz von Lösungsmittel beschrieben. Die CN101339987 beschreibt Verfahren zur Herstellung von Kern-Schale-Partikeln, bei denen zunächst Silicium-Pulver und Graphit durch gemeinsames Mahlen zur Erzeugung des Kern-Partikels gemischt werden und anschließend Bitumen oder Polymere, wie Pech, Teer, Polyvinylalkohol oder Epoxyharz als Kohlenstoff-Precursor für die Schale zugegeben werden. Abschließend erfolgt ein Carbonisieren der Kohlenstoff-Precursoren sowie ein Mahlen und Sieben der Produkte. US2009208844 beschreibt beispielsweise Partikel hergestellt durch Carbonisieren von Mischungen umfassend Aktivmaterialien wie Silicium sowie expandierten Graphit und weiteres Kohlenstoffvorläufermaterial, wie Pech oder organische Polymere, beispielsweise Polyaromaten, Polyvinylalkohol, Phenolharz oder Stärke. Überkorn und Aggregate werden in einem separaten Siebschritt abgetrennt. Die EP2018677 beschreibt Kern-Schale-Kompositpartikel mit einem Kern aus Metallen, wie Silicium, und Metalloxiden sowie einer amorphen Kohlenstoff-Beschichtung sowie einer kristallinen Kohlenstoff-Beschichtung als Schale. Die amorphe Kohlenstoff-Beschichtung wird nach dem CVD-Verfahren oder durch Beschichten des Kerns mit organischen Kohlenstoff-Precursoren, wie Pech, Phenolharze, Polyvinylchlorid oder Polyvinylalkohol, und anschließendes thermisches Carbonisieren aufgebracht. Auch die WO13155397 beschreibt Kompositpartikel basierend auf Siliciumpartikeln, Kohlenstoff-Material, wie Leitruß, und organischen Polymeren. In WO13155397 werden Siliciumpartikel in Gegenwart von puffernden Partikeln, beispielsweise Oxide oder Carbide von Silicium, Aluminium, Titan oder Bor, gemahlen.

Vor diesem Hintergrund bestand also die Aufgabe, Verfahren zur Herstellung von Präkompositpartikeln und Si/C-Kompositpartikeln zu entwickeln, die ohne Zusatz von Lösungsmitteln auskommen und zu nicht-aggregierten oder möglichst wenig aggregierten Präkompositpartikeln führen, die durch thermische Behandlung bzw. Carbonisieren nicht-aggregierte oder möglichst wenig aggregierte Si/C-Kompositpartikel ergeben. Aufwändiges Abtrennen von Über- oder Unterkorn sollte möglichst vermieden werden. Zudem sollten die Präkompositpartikel in einem technologisch möglichst einfachen, einstufigen Verfahren zugänglich werden.

Ein Gegenstand der Erfindung sind Verfahren zur Herstellung von Präkompositpartikeln, indem Siliciumpartikel, Polyacrylnitril und ein oder mehrere Kohlenstoff-Additive (C-Additive) ausgewählt aus der Gruppe umfassend Graphit, Fulleren, Kohlenstoff-Fasern, Glaskohlenstoff, Graphen, Aktivkohle, Ruße, Kohlenstoffnanoröhren, Kohlenstoffnanoschäume und Aerographit, gegebenenfalls ein oder mehrere organische Porenbildner und gegebenenfalls ein oder mehrere anorganische Zusatzstoffe,
je in Form eines Pulvers, gemischt werden, wobei vor und während des Mischens kein Lösungsmittel zugegeben wird, und die anorganischen Zusatzstoffe ausgewählt werden aus der Gruppe umfassend Halogenide der Alkali- und Erdalkalimetalle, Carbonate der Alkalimetalle, Zinkoxid, Magnesiumcarbonat und Nickelsulfid,
wobei das Polyacrylnitril, die Siliciumpartikel und/oder die C-Additive ganz oder teilweise vor dem Mischen vorgelegt oder ganz oder teilweise während des Mischens zudosiert werden,
mit der Maßgabe, dass ohne Polyacrylnitril in der Vorlage die Siliciumpartikel und/oder die C-Additive zumindest anteilig gemeinsam mit Polyacrylnitril oder nach Zugabe von Polyacrylnitril zudosiert werden.

Ein Präkompositpartikel ist allgemein ein Agglomerat basierend auf Siliciumpartikeln, C-Additiven und Polyacrylnitril sowie gegebenenfalls organischen Porenbildnern und gegebenenfalls anorganischen Zusatzstoffen. Agglomerate können unter mechanischer Einwirkung wieder in ihre einzelnen Bestandteile zerfallen.

Bei Polyacrylnitril kann es sich allgemein um Homopolymere von Acrylnitril oder um Copolymere von Acrylnitril und einem oder mehreren ethylenisch ungesättigten Co-Monomeren handeln. Beispiele für Co-Monomere sind Styrol, Butadien, Acrylate und Methacrylate. Polyacrylnitril basiert vorzugsweise zu mindestens 80 Gew.%, besonders bevorzugt zu mindestens 85 Gew.%, noch mehr bevorzugt zu mindestens 95 Gew.% und am meisten bevorzugt zu mindestens 98 Gew.% auf Acrylnitril. Bevorzugt sind Copolymere aus Methacrylat und mindestens 90 Gew.% Acrylnitril und Copolymere mit mindestens 98 Gew.% Acrylnitril, insbesondere Homopolymere von Acrylnitril.

Polyacrylnitril lässt sich allgemein durch thermische Behandlung in leitfähige Kohlenstoff-Strukturen überführen.

Die Präkompositpartikel basieren vorzugsweise zu ≤ 60 Gew.%, besonders bevorzugt ≤ 50 Gew.% und am meisten bevorzugt ≤ 45 Gew.% auf Polyacrylnitril. Die Präkompositpartikel basieren vorzugsweise zu ≥ 5 Gew.%, besonders bevorzugt ≥ 7 Gew.% und am meisten bevorzugt ≥ 10 Gew.% auf Polyacrylnitril. Die vorgenannten Angaben in Gew.% beziehen sich jeweils auf das Gesamtgewicht der Präkompositpartikel.

Das Gewichtsverhältnis der Siliciumpartikel zu Polyacrylnitril beträgt vorzugsweise ≤ 10, besonders bevorzugt ≤ 5 und am meisten bevorzugt ≤ 3. Das Gewichtsverhältnis der Siliciumpartikel zu C-Additiv beträgt vorzugsweise ≥ 0,01, besonders bevorzugt ≥ 0,05 und am meisten bevorzugt ≥ 0,1.

Als C-Additive können kristalline, teilkristalline oder vorzugsweise nicht-kristalline (amorphe) Kohlenstoff-Verbindungen eingesetzt werden. Beispiele für kristalline oder teilkristalline C-Additive sind Graphit, expandierter Graphit und Fulleren. Unter nicht-kristallinen (amorphen) C-Additiven versteht man allgemein Kohlenstoff-Fasern, Glaskohlenstoff, Graphen, Aktivkohle, Ruße, Kohlenstoffnanoröhren, Kohlenstoffnanoschäume und Aerographit

Bevorzugte C-Additive werden ausgewählt aus der Gruppe umfassend Graphit, (Leit-)Ruß, Aktivkohle, Carbon Nanotubes (CNTs), Fullerene und Graphen. Besonders bevorzugte C-Additive sind Graphit, Leitruß und Aktivkohle.

In einer bevorzugten Ausführungsform werden als C-Additive keine kristallinen oder teilkristallinen Kohlenstoff-Verbindungen, insbesondere kein Graphit eingesetzt.

Am meisten bevorzugte C-Additive sind Leitruß und Aktivkohle.

Die Präkompositpartikel basieren vorzugsweise zu ≤ 90 Gew.%, besonders bevorzugt ≤ 85 Gew.% und am meisten bevorzugt ≤ 80 Gew.% auf C-Additiven. Die Präkompositpartikel basieren vorzugsweise zu ≥ 3 Gew.%, besonders bevorzugt ≥ 5 Gew.% und am meisten bevorzugt ≥ 10 Gew.% auf C-Additiven. Die vorgenannten Angaben in Gew.% beziehen sich jeweils auf das Gesamtgewicht der Präkompositpartikel.

Das Gewichtsverhältnis aus Polyacrylnitril und C-Additiv ist vorzugsweise ≥ 0,1, bevorzugt ≥ 0,4 besonders bevorzugt ≥ 0,7.

Das Gewichtsverhältnis aus Polyacrylnitril und C-Additiv ist vorzugsweise ≤ 20, besonders bevorzugt ≤ 15 und am meisten bevorzugt ≤ 10.

Siliciumpartikel können aus elementarem Silicium, einem Siliciumoxid oder einer binären, ternären oder multinären Silicium/Metall-Legierung (mit beispielsweise Li, Na, K, Sn, Ca, Co, Ni, Cu, Cr, Ti, Al, Fe) bestehen. Bevorzugt wird elementares Silicium eingesetzt, insbesondere da dieses eine vorteilhaft hohe Speicherkapazität für Lithium-Ionen aufweist.

Unter elementarem Silicium ist im Allgemeinen hochreines Polysilicium, mit geringem Anteil an Fremdatomen (wie beispielsweise B, P, As), gezielt mit Fremdatomen dotiertes Silicium (wie beispielsweise B, P, As), aber auch Silicium aus metallurgischer Verarbeitung, welches elementare Verunreinigung (wie beispielsweise Fe, Al, Ca, Cu, Zr, C) aufweisen kann, zu verstehen.

Falls die Siliciumpartikel ein Siliciumoxid enthalten, dann liegt die Stöchiometrie des Oxids SiOₓ bevorzugt im Bereich 0 < x < 1,3. Falls die Siliciumpartikel ein Siliciumoxid mit höherer Stöchiometrie enthalten, dann ist dessen Schichtdicke auf der Oberfläche bevorzugt kleiner als 10 nm.

Wenn die Siliciumpartikel mit einem Alkalimetall M legiert sind, dann liegt die Stöchiometrie der Legierung M_{y}Si bevorzugt im Bereich 0 < y < 5. Die Siliciumpartikel können gegebenenfalls prälithiiert sein. Für den Fall, dass die Siliciumpartikel mit Lithium legiert sind, liegt die Stöchiometrie der Legierung Li_{z}Si bevorzugt im Bereich 0 < z < 2,2.

Besonders bevorzugt sind Siliciumpartikel, die ≥ 80 Mol% Silicium und/oder ≤ 20 Mol% Fremdatome, ganz besonders bevorzugt ≤ 10 Mol% Fremdatome enthalten.

Die Oberfläche der Siliciumpartikel kann gegebenenfalls durch eine Oxidschicht oder durch andere anorganische und organische Gruppen abgedeckt sein. Besonders bevorzugte Siliciumpartikel tragen auf der Oberfläche Si-OH- oder Si-H-Gruppen oder kovalent angebundene organische Gruppen, wie beispielsweise Alkohole oder Alkene.

Die zur Herstellung der Präkompositpartikel eingesetzten Siliciumpartikel haben volumengewichtete Partikelgrößenverteilungen mit Medianwerten des Durchmessers d50 von vorzugsweise 50 nm bis 50 pm, besonders bevorzugt 100 nm bis 30 µm und am meisten bevorzugt 150 nm bis 10 µm.

Die volumengewichtete Partikelgrößenverteilung ist bestimmbar durch statische Laserstreuung unter Anwendung des Fraunhofer- oder des Mie-Modells mit dem Messgerät Horiba LA 950 mit Ethanol oder Isopropanol als Dispergiermedium für die Siliciumpartikel.

Die Siliciumpartikel sind vorzugsweise nicht agglomeriert, insbesondere nicht aggregiert.

Aggregiert bedeutet, dass sphärische oder weitestgehend sphärische Primärpartikel, wie sie beispielsweise zunächst in Gasphasenprozessen bei der Herstellung der Siliciumpartikel gebildet werden, im weiteren Reaktionsverlauf des Gasphasenprozesses zu Aggregaten zusammenwachsen. Diese Aggregate können im weiteren Reaktionsverlauf Agglomerate bilden. Agglomerate sind eine lose Zusammenballung von Aggregaten. Agglomerate können mit tpyischerweise eingesetzten Knet- und Dispergierverfahren leicht wieder in die Aggregate aufgespalten werden. Aggregate lassen sich mit diesen Verfahren nicht oder nur teilweise in die Primärpartikel zerlegen. Aggregate und Agglomerate haben auf Grund ihrer Entstehung zwangsläufig ganz andere Sphärizitäten und Kornformen als die erfindungsgemäßen Siliciumpartikel. Das Vorliegen von Siliciumpartikeln in Form von Aggregaten oder Agglomeraten kann beispielsweise mittels herkömmlicher Raster-Elektronen-Mikroskopie (REM) sichtbar gemacht werden. Statische Lichtstreuungsmethoden zur Bestimmung der Teilchengrößenverteilungen oder Partikeldurchmessern von Siliciumpartikeln können dagegen nicht zwischen Aggregaten oder Agglomeraten unterscheiden.

Die Siliciumpartikel haben eine Sphärizität von vorzugsweise 0,3 ≤ ψ ≤ 1, besonders bevorzugt 0,4 ≤ ψ ≤ 1 und am meisten bevorzugt 0,5 ≤ ψ ≤ 1. Die Sphärizität ψ ist das Verhältnis aus der Oberfläche einer Kugel gleichen Volumens zur tatsächlichen Oberfläche eines Körpers (Definition von Wadell). Sphärizitäten können beispielsweise aus herkömmlichen REM-Aufnahmen ermittelt werden.

Die Siliciumpartikel haben vorzugsweise bestimmte Schüttguteigenschaften. Schüttguteigenschaften sind beispielsweise in der internationalen Norm FEM 2.581 der "Federation Europeenne de la Manutention" beschrieben. In der Norm FEM 2.582 werden die allgemeinen und spezifischen Schüttguteigenschaften hinsichtlich der Klassifizierung definiert. Kennwerte, die die Konsistenz und den Zustand des Gutes beschreiben sind zum Beispiel Kornform und Korngrößenverteilung (FEM 2.581 / FEM 2.582: General characteristics of bulk products with regard to their classification and their symbolization).

Nach DIN ISO 3435 können Schüttgüter in Abhängigkeit der Beschaffenheit der Kornkanten in sechs unterschiedliche Kornformen untergliedert werden:
I: scharfe Kanten mit ungefähr gleichen Ausmaßen in den drei Dimensionen (Bsp.: Würfel);
II: scharfe Kanten, deren eine deutlich länger ist als die anderen beiden (Bsp.: Prisma, Klinge);
III: scharfe Kanten, deren eine deutlich kleiner ist als die beiden anderen (Bsp.: Platte, Schuppen);
IV: runde Kanten mit ungefähr gleichen Ausmaßen in den drei Dimensionen (Bsp.: Kugel);
V: runde Kanten, in einer Richtung deutlich größer als in den anderen beiden (Bsp.: Zylinder, Stange);
VI: faserig, fadenförmig, lockenförmig, verschlungen.

Die Siliciumpartikel haben vorzugsweise Kornformen I bis VI, mehr bevorzugt I, II, III oder IV und besonders bevorzugt I oder IV gemäß DIN ISO 3435.

Die Präkompositpartikel basieren vorzugsweise zu ≤ 70 Gew.%, besonders bevorzugt ≤ 65 Gew.% und am meisten bevorzugt ≤ 60 Gew.% auf Siliciumpartikeln. Die Präkompositpartikel basieren vorzugsweise zu ≥ 5 Gew.%, besonders bevorzugt ≥ 10 Gew.% und am meisten bevorzugt ≥ 15 Gew.% auf Siliciumpartikeln. Die vorgenannten Angaben in Gew.% beziehen sich jeweils auf das Gesamtgewicht der Präkompositpartikel.

Das Gewichtsverhältnis der Siliciumpartikel zu C-Additiv beträgt vorzugsweise ≤ 4, besonders bevorzugt ≤ 3 und am meisten bevorzugt ≤ 2,5. Das Gewichtsverhältnis der Siliciumpartikel zu C-Additiv beträgt vorzugsweise ≥ 0,1, besonders bevorzugt ≥ 0,2und am meisten bevorzugt ≥ 0,3.

Die Siliciumpartikel können beispielsweise mittels Gasphasenabscheidung oder vorzugsweise durch Mahlprozesse hergestellt werden.

Als Mahlprozesse kommen Trocken- oder Nassmahlprozesse in Betracht. Hierbei werden vorzugsweise Strahlmühlen, wie Gegenstrahlmühlen, oder Prallmühlen, Planetenkugelmühlen oder Rührwerkskugelmühlen eingesetzt. Die Strahlmühlen weisen bevorzugt einen integrierten Windsichter auf, der statisch oder dynamisch ausgebildet sein kann, oder sie werden im Kreislauf mit einem externen Windsichter betrieben.

Die Nassmahlung erfolgt im Allgemeinen in einer Suspension mit organischen oder anorganischen Dispergiermedien. Bevorzugte Dispergiermedien sind die weiter oben beschriebenen Dispergierflüssigkeiten.

Bei der Nassmahlung werden vorzugsweise Mahlkörper verwendet, deren mittlerer Durchmesser 10 bis 1000 mal größer ist als der 90%-Perzentilwert d₉₀ des Durchmessers des eingesetzten Mahlguts, bezogen auf die Partikelgrößenvolumenverteilung. Besonders bevorzugt sind Mahlkörper, deren mittlerer Durchmesser 20 bis 200-mal größer ist als der d₉₀-Wert der Ausgangsverteilung des Mahlguts.

Bevorzugte anorganische Zusatzstoffe sind Halogenide der Alkali- und Erdalkalimetalle, Carbonate der Alkalimetalle, Zinkoxid, Magnesiumcarbonat und Nickelsulfid. Die anorganischen Zusatzstoffe können beispielsweise als Porenbildner dienen. Porenbildner können in herkömmlicher Weise aus den Partikeln freigesetzt werden unter Bildung von Partikeln mit größerer Porosität.

Die Präkompositpartikel basieren vorzugsweise zu 0 bis 25 Gew.% und besonders bevorzugt 2 bis 20 Gew.% auf anorganischen Zusatzstoffen, bezogen auf das Gesamtgewicht der Präkompositpartikel. Am meisten bevorzugt enthalten die Präkompositpartikel keine anorganischen Zusatzstoffe und/oder keine sonstigen anorganischen Bestandteile.

Zusätzlich können ein oder mehrere organische Porenbildner eingesetzt werden. Typische organische Porenbildner haben bei einer Temperatur ausgewählt aus dem Bereich von 25 bis 1000°C einen Masseverlust von ≥ 50 Gew.-%, bevorzugt ≥ 80 Gew.-% und besonders bevorzugt ≥ 90 Gew.-%.

Beispiele für organische Porenbildner sind Homo- oder Copolymere von ethylenisch ungesättigten Monomeren, beispielsweise Polyethylen, Polypropylen, Polystyrol, Polybutadien, Poly-tert-Butoxystyrol, Polyvinylchlorid, Polyvinylacetat, Polymethylmethacrylat, Polyacrylsäure, Polymethacrylat, Polyvinylstearat Polyvinyllaurat oder deren Copolymere; Polyvinylalkohol; Alkylenglycole, wie Ethylenglycol, Butylengylcol, Diethylengylcol, Triethylenglycol; Polyalkylenoxide, wie Polyethylenoxide, Polypropylenoxide oder deren Copolymere; Lignin, Polysaccharide, Phenol-Harze, Melaminharze, Resorcin-Harze oder Polyurethane Bevorzugte Porenbildner werden ausgewählt aus der Gruppe umfassend Polyethylen, Polystyrol, Polymethylmethacrylat, Alkylenglycole und Polyalkylenoxide, wie Polyethylenoxid, Polypropylenoxid und Polyethylenoxid-Polypropylenoxid-Copolymere, Polyvinylacetat, Styrol-Butadien-Copolymer.

Die Präkompositpartikel basieren vorzugsweise zu 0 bis 60 Gew.%, besonders bevorzugt 5 bis 55 Gew.% und am meisten bevorzug 10 bis 50 Gew.% auf organischen Porenbildnern, bezogen auf das Gesamtgewicht der Präkompositpartikel.

Porenbildner enthaltende Präkompositpartikel führen zu Si/C-Kompositpartikeln, die bei Einsatz in Anodenaktivmaterialien von Lithiumionen-Batterien die Coulomb-Effizienz oder die elektrochemische Stabilität steigern.

Die Mischungen können auch ein oder mehrere Additive enthalten, wie beispielsweise Verlaufsmittel, Dotiermittel oder Stoffe, die die elektrochemische Stabilität der Elektrode in der Batterie verbessern.

Die Präkompositpartikel basieren vorzugsweise zu 0 bis 50 Gew.%, besonders bevorzugt 1 bis 40 Gew.% und am meisten bevorzugt 2 bis 30 Gew.% auf Additiven, bezogen auf das Gesamtgewicht der Präkompositpartikel. In einer bevorzugten, alternativen Ausführungsform enthalten die Präkompositpartikel keine Additive.

Die Präkompositpartikel fallen vorzugsweise in Form von isolierten Partikeln oder lockeren Agglomeraten von Präkompositpartikeln an, jedoch im Allgemeinen nicht in Form von Aggregaten von Präkompositpartikeln. Agglomerate sind Zusammenballungen von mehreren Präkompositpartikeln. Aggregate sind Zusammenlagerungen von Präkompositpartikeln. Agglomerate lassen sich in die einzelnen Präkompositpartikel separieren, beispielsweise mit Knet- oder Dispergierverfahren. Aggregate lassen sich auf diese Weise nicht in die einzelnen Partikel trennen, ohne Präkompositpartikel zu zerstören.

Die Präkompositpartikel liegen vorzugsweise in Form von Kern-Schale-Partikeln vor. Polyacrylnitril bildet vorzugsweise den Kern. Die Schale wird vorzugsweise von Siliciumpartikeln und/oder C-Additiv gebildet. Durch Einwirkung von Ultraschall lassen sich die Kern-Schale-Partikel wieder in ihre Ausgangsstoffe deagglomerieren.

Die Präkompositpartikel sind bevorzugt sphärisch, können aber auch eine Splitterform aufweisen. Die Präkompositpartikel haben eine Sphärizität von vorzugsweise 0,3 ≤ ψ ≤ 1, besonders bevorzugt 0,5 ≤ ψ < 1 und am meisten bevorzugt 0,8 ≤ ψ ≤ 1. Die Sphärizität ψ ist das Verhältnis aus der Oberfläche einer Kugel gleichen Volumens zur tatsächlichen Oberfläche eines Körpers (Definition von Wadell). Sphärizitäten können beispielsweise aus herkömmlichen REM-Aufnahmen ermittelt werden.

Die Siliciumpartikel, Polyacrylnitril, die C-Additive sowie die optionalen organischen Porenbildner, anorganischen Zusatzstoffe und Additive werden im Allgemeinen in Form von Pulvern eingesetzt. Unter Pulver werden allgemein kleinteilige, partikuläre, trockene Feststoffe verstanden. Pulver können unterschiedliche Formen annehmen, wie beispielsweise Puder-, Körner- oder sonstige Partikel-Formen.

Bei der Herstellung der Präkompositpartikel wird allgemein kein Lösungsmittel zugesetzt. Das Verfahren wird also im Allgemeinen in Abwesenheit von Lösungsmittel durchgeführt. Dies schließt jedoch nicht aus, dass die eingesetzten Edukte, beispielsweise in Folge ihrer Herstellung, etwaige Restgehalte an Lösungsmittel enthalten. Vorzugsweise enthalten die Siliciumpartikel, Polyacrylnitril, die C-Additive, die organischen Porenbildner, die anorganischen Zusatzstoffe, die Additive und/oder die Präkomposite ≤ 2 Gew.%, besonders bevorzugt ≤ 1 Gew.% und am meisten bevorzugt ≤ 0,5 Gew.% Lösungsmittel.

Beispiele für Lösungsmittel sind anorganische Lösungsmittel, wie Wasser, oder organische Lösungsmittel, insbesondere Kohlenwasserstoffe, Ether, Ester, Stickstoff-funktionelle Lösungsmittel, Schwefel-funktionelle Lösungsmittel oder Alkohole mit vorzugsweise 1 bis 12 Kohlenstoffatomen und besonders bevorzugt 1 bis 8 Kohlenstoffatomen. Konkrete Beispiele für Lösungsmittel sind Wasser, Ethanol und 2-Propanol, Dimethylformamid, N-Methyl-2-Pyrrolidon, N-Ethyl-2-Pyrrolidon und Dimethylsulfoxid.

Die Siliciumpartikel, Polyacrylnitril und die C-Additive sowie die optionalen organischen Porenbildner, anorganischen Zusatzstoffe und Additive werden im Folgenden gemeinsam auch als Ausgangsstoffe bezeichnet.

Zur Herstellung der Präkompositpartikel werden die unterschiedlichen Ausgangsstoffe vermischt oder vermahlen.

Die Siliciumpartikel, Polyacrylnitril und die C-Additive sowie gegebenenfalls die weiteren Ausgangsstoffe können vor dem Mischen oder Mahlen teilweise oder vorzugsweise vollständig vorgelegt werden. Polyacrylnitril wird vorzugsweise teilweise und besonders bevorzugt vollständig vor dem Mischen oder Mahlen vorgelegt. Die Siliciumpartikel, die C-Additive und Polyacrylnitril werden vorzugsweise zu ≥ 10 Gew.-%, besonders bevorzugt ≥ 20 Gew.-% und am meisten bevorzugt ≥ 30 Gew.-% vorgelegt, bezogen auf das Gesamtgewicht der Ausgangsstoffe. Polyacrylnitril wird vorzugsweise zu ≥ 40 Gew.-%, besonders bevorzugt ≥ 60 Gew.-% und am meisten bevorzugt ≥ 70 Gew.-% vorgelegt, bezogen auf das Gesamtgewicht des insgesamt eingesetzten Polyacrylnitrils.

Alternativ können Polyacrylnitril und insbesondere die Siliciumpartikel, die C-Additive sowie die gegebenenfalls eingesetzten weiteren Ausgangsstoffe vollständig oder anteilig während des Mischens oder Mahlens zudosiert werden.

Falls Polyacrylnitril teilweise zudosiert wird und insbesondere falls Polyacrylnitril vollständig zudosiert wird, wird vorzugsweise die insgesamt eingesetzte Menge an Siliciumpartikeln und/oder C-Additiven oder ein Anteil davon gleichzeitig mit Polyacrylnitril zudosiert und/oder nach der vollständigen Zugabe von Polyacrylnitril zudosiert.

Bei teilweisem und insbesondere bei vollständigem Zudosieren von Polyacrylnitril werden nach Ende der Zudosierung von Polyacrylnitril noch vorzugsweise 0 bis 50 Gew.-% und besonders bevorzugt 0,1 bis 30 Gew.-% an Siliciumpartikeln und/oder C-Additiven zudosiert, bezogen auf das Gesamtgewicht der insgesamt eingesetzten Menge an Siliciumpartikeln und C-Additiven.

Im Allgemeinen wird also nach vollständiger Zugabe der Siliciumpartikel und der C-Additive kein Polyacrylnitril mehr zudosiert.

Ansonsten können die einzelnen Ausgangsstoffe in beliebiger Reihenfolge, also räumlich getrennt oder räumlich gemeinsam, zeitlich nacheinander oder gleichzeitig, vor oder während des Mischens in die Mischvorrichtung eingebracht werden. Vorzugsweise werden alle Ausgangsstoffe räumlich getrennt, vor oder während des Mischens, gegebenenfalls gleichzeitig in die Mischvorrichtung eingebracht.

Alternativ kann auch eine Vormischung aus ein oder mehreren unterschiedlichen Ausgangsstoffen hergestellt werden, die anschließend mit den verbleibenden Ausgangsstoffen gemischt werden. Eine Vormischung enthält vorzugsweise ein oder mehrere C-Additive und ein oder mehrere organische Porenbildner.

Besonders bevorzugt werden alle Ausgangsstoffe gleichzeitig dem Mischen unterworfen.

Es können gängige Mischer, insbesondere industrielle Mischer Einsatz finden. Beispiele für Mischer sind Freifallmischer, wie Containermischer, Konusmischer, Fassrollmischer, Rhönradmischer, Taumelmischer oder Schub- und Wurfmischer wie Trommelmischer und Schneckenmischer. Weitere Beispiele für geeignete Mischer sind in "Mischen von Feststoffen" von R. Weinekötter und H. Gericke, Springer 1995 angeführt. Alternativ können hierfür auch gängige Mühlen eingesetzt werden, wie zum Beispiel Planetenkugelmühlen, Rührwerkskugelmühlen oder Trommelmühlen. Bevorzugt werden Schneckenmischer, Trommelmischer oder Trommelmühlen eingesetzt.

Das Mischen erfolgt vorzugsweise bei Temperaturen von 0 bis 50°C und besonders bevorzugt 15 bis 35°C. Jedenfalls erfolgt das Mischen bei Temperaturen von vorzugsweise ≤ 300°C, mehr bevorzugt ≤ 200°C und besonders bevorzugt ≤ 100°C. Die Dauer des Mischens beträgt vorzugsweise 0,5 bis 20 Stunden, besonders bevorzugt 1 bis 15 Stunden und am meisten bevorzugt 1,5 bis 10 Stunden.

Durch die thermische Behandlung werden die Präkompositpartikel in Si/C-Kompositpartikel überführt. Hierbei erfolgt im Allgemeinen eine Carbonisierung von Polyacrylnitril. Polyacrylnitril wird dabei vorzugsweise in anorganischen Kohlenstoff überführt. Die Kohlenstoffausbeute beim Carbonisieren von Polyacrylnitril beträgt vorzugsweise ≥ 15%, besonders bevorzugt ≥ 20% und am meisten bevorzugt ≥ 25%, bezogen auf das Gesamtgewicht von Polyacrylnitril. Der Kohlenstoff in den Si/C-Kompositpartikeln kann kristallin oder amorph vorliegen sowie Mischungen aus kristallinen und amorphen Bestandteilen enthalten.

Auf Grund der Herstellung der Si/C-Komposit-partikel sind darin die Siliciumpartikel und die C-Additive im Allgemeinen vollständig oder teilweise in Kohlenstoff eingebettet. Die Oberfläche der Si/C-Kompositpartikel besteht vorzugsweise vollständig oder teilweise, besonders bevorzugt im Wesentlichen aus Kohlenstoff.

Die Si/C-Kompositpartikel fallen vorzugsweise in Form von isolierten Partikeln oder lockeren Agglomeraten von Si/C-Komposit-partikeln an, jedoch im Allgemeinen nicht in Form von Aggregaten von Si/C-Kompositpartikeln. Etwaige Agglomerate von Si/C-Kompositpartikeln lassen sich in die einzelnen Si/C-Komposit-partikel separieren, beispielsweise durch Knet- oder Dispergierverfahren. Dagegen lassen sich Aggregate von Si/C-Kompositpartikeln auf diese Weise nicht in die einzelnen Partikel trennen, ohne Si/C-Kompositpartikel zu zerstören.

Die Si/C-Kompositpartikel weisen typischerweise BET-Oberflächen auf von bevorzugt 1 bis 200 m²/g, besonders bevorzugt 2 bis 150 m²/g und am meisten bevorzugt 5 bis 100 m²/g (Bestimmung nach DIN ISO 9277:2003-05).

Die Si/C-Kompositpartikel sind bevorzugt sphärisch, können aber auch eine Splitterform aufweisen. Die Si/C-Kompositpartikel haben eine Sphärizität von vorzugsweise 0,3 ≤ ψ ≤ 1, besonders bevorzugt 0,5 ≤ ψ ≤ 1 und am meisten bevorzugt 0,8 ≤ ψ ≤ 1. Die Sphärizität ψ ist das Verhältnis aus der Oberfläche einer Kugel gleichen Volumens zur tatsächlichen Oberfläche eines Körpers (Definition von Wadell). Sphärizitäten können beispielsweise aus herkömmlichen REM-Aufnahmen ermittelt werden.

Die Si/C-Kompositpartikel haben volumengewichtete Partikelgrößenverteilungen mit Durchmesser-Perzentilen d₅₀ von vorzugsweise ≥ 0,5 pm, besonders bevorzugt ≥ 1 µm und am meisten bevorzugt ≥ 2 µm. Die Si/C-Kompositpartikel haben d₅₀-Werte von vorzugsweise ≤ 100 µm, mehr bevorzugt ≤ 50 µm, besonders bevorzugt ≤ 36 µm und am meisten bevorzugt ≤ 20 µm.

Die Partikelgrößenverteilung der Si/C-Kompositpartikel kann bimodal oder polymodal sein und ist bevorzugt monomodal, besonders bevorzugt schmal. Die volumengewichtete Partikelgrößenverteilung der Si/C-Kompositpartikel hat eine Breite (d₉₀-d₁₀) /d₅₀ von bevorzugt ≤ 3, mehr bevorzugt ≤ 2,5, besonders bevorzugt ≤ 2 und am meisten bevorzugt ≤ 1,5.

Die Bestimmung der volumengewichteten Partikelgrößenverteilung der Si/C-Kompositpartikel erfolgte durch statische Laserstreuung unter Anwendung des Mie-Modells mit dem Messgerät Horiba LA 950 mit Ethanol als Dispergiermedium für die Si/C-Kompositpartikel.

Die Si/C-Kompositpartikel weisen einen Aggregationsgrad von bevorzugt ≤ 20%, besonders bevorzugt ≤ 15% und am meisten bevorzugt ≤ 10% auf. Bestimmt wird der Aggregationsgrad durch eine Siebanalyse. Der Aggregationsgrad entspricht dem Prozentsatz der Partikel, die nach Dispersion in Ethanol bei gleichzeitiger Ultraschallbehandlung nicht durch ein Sieb mit einer Maschenweite von 20 µm hindurch treten.

Die Si/C-Kompositpartikel sind vorzugsweise porös. Die Si/C-Kompositpartikel enthalten Poren mit Durchmessern von vorzugsweise ≥ 60 nm, besonders bevorzugt ≥ 100 nm und am meisten bevorzugt ≥ 200 nm. Die Poren haben Durchmesser von vorzugsweise ≤ 1400 nm, besonders bevorzugt ≤ 700 nm und am meisten bevorzugt ≤ 400 nm (Bestimmungsmethode: Raster-Elektronen-Mikroskopie (REM)).

Besonders bevorzugt befinden sich Siliciumpartikel in Poren. Der Anteil der Siliciumpartikel, die sich in Poren befinden, beträgt vorzugsweise ≥ 5%, besonders bevorzugt ≥ 20% und am meisten bevorzugt ≥ 50%, bezogen auf die Gesamtzahl der Siliciumpartikel in den Si/C-Kompositpartikeln (Bestimmungsmethode: Raster-Elektronen-Mikroskopie (REM)).

Die Si/C-Kompositpartikel basieren zu vorzugsweise 5 bis 50 Gew.-%, besonders bevorzugt 10 bis 40 Gew.-%, am meisten bevorzugt 20 bis 40 Gew.-% auf Silicium; vorzugsweise 50 bis 95 Gew.-%, besonders bevorzugt 60 bis 85 Gew%, am meisten bevorzugt 60 bis 80 Gew.-% Kohlenstoff. Weiterhin können SauerstoffGehalte von beispielsweise ≤ 20 Gew.-%, bevorzugt ≤ 10 Gew.-% und besonders bevorzugt ≤ 5 Gew.-% enthalten sein, beispielsweise in Form einer nativen SiO₂-Schicht auf den Siliciumpartikeln. Gewisse Mengen an Stickstoff in den Si/C-Kompositpartikeln sind vorteilhaft und betragen beispielsweise 0,5 bis 10 Gew.-% und besonders bevorzugt zwischen 2 bis 5 Gew.-% Stickstoff liegt hierbei vorzugsweise chemisch gebunden in Form von Heterocyclen vor, beispielsweise als Pyridin- oder Pyrrol-Einheiten (N). Neben den genannten Hauptbestandteilen können auch weitere chemische Elemente in Form eines gezielten Zusatzes oder zufälliger Verunreinigung enthalten sein: wie beispielsweise Li, Fe, Al, Cu, Ca, K, Na, S, Cl, Zr, Ti, Pt, Ni, Cr, Sn, Mg, Ag, Co, Zn, B, P, Sb, Pb, Ge, Bi, Seltene Erden; deren Gehalte sind bevorzugt ≤ 1 Gew.-% und besonders bevorzugt ≤ 100 ppm. Die vorgenannten Angaben in Gew.% beziehen sich jeweils auf das Gesamtgewicht der Si/C-Kompositpartikel. Die Angaben in Gew.-% beziehen sich jeweils auf das Gesamtgewicht der Si/C-Kompositpartikel.

Die thermische Behandlung der Präkompositpartikel erfolgt bei Temperaturen von vorzugsweise 400 bis 1400°C, besonders bevorzugt 700 bis 1200°C und am meisten bevorzugt 900 bis 1100°C.

Die thermische Behandlung kann beispielsweise in einem Rohrofen, Glühofen, Drehrohrofen oder einem Wirbelschichtreaktor stattfinden. Durch Wahl des Reaktortyps kann die Carbonisierung statisch oder unter ständiger Durchmischung des Reaktionsmediums durchgeführt werden.

Die thermische Behandlung kann unter aeroben oder anaeroben Bedingungen stattfinden. Beispielsweise kann eine erste thermische Behandlung bei Temperaturen bis 300°C unter Sauerstoffhaltiger Atmosphäre und eine zweite thermische Behandlung bei Temperaturen > 300°C unter Inertgas-Atmosphäre durchgeführt werden. Die thermische Behandlung wird vorzugsweise in einer Inertgas-Atmosphäre, wie Stickstoff- oder vorzugsweise ArgonAtmosphäre, durchgeführt. Die Inertgas-Atmosphäre kann gegebenenfalls zusätzlich Anteile eines reduzierenden Gases, wie Wasserstoff, enthalten. Die thermische Behandlung erfolgt vorzugsweise anaerob. Die Inertgas-Atmosphäre kann sich statisch über dem Reaktionsmedium befinden oder in Form eines Gasflusses über die Reaktionsmischung strömen. Die Flussraten betragen hierbei vorzugsweise bis zu 1 Liter pro Minute, besonders bevorzugt 100 bis 600 mL/min und am meisten bevorzugt 200 bis 250 mL/min, insbesondere im Falle der Carbonisierung von 2 bis 150 g Präkompositpartikel oder einem Reaktorvolumen von 7000 bis 11000 cm³. Die Heizraten beim Aufheizen der Reaktionsmischung betragen vorzugsweise 1 bis 20°C pro Minute, mehr bevorzugt 1 bis 15°C/min, besonders bevorzugt 1 bis 10°C/min und am meisten bevorzugt 3 bis 5°C/min. Weiterhin ist auch ein stufenweiser Prozess mit verschiedenen Zwischentemperaturen und -heizraten möglich. Nach Erreichen der Zieltemperatur wird die Reaktionsmischung üblicherweise eine gewisse Zeit bei der Temperatur getempert oder anschließend sogleich abgekühlt. Vorteilhaft sind Haltedauern von beispielsweise 30 min bis 24 h, bevorzugt 1 bis 10 h und besonders bevorzugt 2 bis 3 h. Das Abkühlen kann aktiv oder passiv, gleichmäßig oder stufenweise durchgeführt werden.

Die so erhaltenen Si/C-Kompositpartikel können unmittelbar ihrer weiteren Verwertung zugeführt werden, beispielsweise zur Herstellung von Elektrodenmaterialien, oder alternativ zuerst mechanisch, beispielsweise durch Mahlung oder Siebung, nachbehandelt oder durch Klassierungstechniken (Sieben, Sichten) von Über- oder Unterkorn befreit werden. Vorzugsweise unterbleiben mechanische Nachbehandlungen oder Klassierung, insbesondere unterbleibt ein Mahlen, Sieben oder Sichten.

Die Oberfläche der Si/C-Kompositpartikel kann auch modifiziert werden, beispielsweise durch Aufbringen einer oder mehrerer Beschichtungen, insbesondere einer Kohlenstoffbeschichtung. Hierzu können die Si/C-Kompositpartikel zuerst mit einem oder mehreren Kohlenstoff-Precursoren beschichtet und anschließend eine Carbonisierung durchgeführt werden. Kohlenstoff-Precursoren sind beispielsweise Teere oder Peche, insbesondere hochschmelzende Peche, HardCarbon (nicht-graphitisierbar bei Temperaturen von 2500 bis 3000°C), SoftCarbon (graphitisierbar bei Temperaturen von 2500 bis 3000°C). Die Carbonisierung kann beispielsweise erfolgen wie die weiter oben beschriebene thermische Behandlung zur Carbonsierung der Präkompositpartikel. Alternativ können die Si/C-Kompositpartikel nach herkömmlichen CVD-Verfahren (chemical vapor deposition; chemische Gasphasenabscheidung) mit Kohlenwasserstoffen mit 1 bis 20 Kohlenstoffatomen als Kohlenstoff-Precursoren beschichtet werden. Auf diese Weise werden Kohlenstoff-beschichtete Si/C-Kompositpartikel erhalten.

Die so erhaltene Kohlenstoff-Beschichtung der Si/C--Kompositpartikel hat vorzugsweise eine Porosität von ≤ 2% und besonders bevorzugt ≤ 1% (Bestimmungsmethode der Gesamtporosität: 1 minus [Quotient aus Rohdichte (bestimmt mittels Xylol-Pyknometrie gemäß DIN 51901) und Skelettdichte (bestimmt mittels He-Pyknometrie gemäß DIN 66137-2)]).

Die Kohlenstoff-Beschichtung der Si/C-Kompositpartikel ist im Allgemeinen undurchlässig für flüssige Medien, wie wässrige oder organische Lösungsmittel oder Lösungen, insbesondere wässrige oder organische Elektrolyte, Säuren oder Laugen.

Die Si/C-Kompositpartikel eignen sich beispielsweise als Silicium-basierte Aktivmaterialien für Anodenaktivmaterialien für Lithium-Ionen-Batterien.

Die Si/C-Kompositpartikel können als Silicium-Komponente für Elektrodenmaterialien von Lithiumionen-Batterien eingesetzt werden. Die Herstellung entsprechender Lithiumionen-Batterien kann beispielsweise erfolgen wie in der WO 2015/117838 beschrieben.

Vorteilhafter Weise sind die Präkompositpartikel nach dem erfindungsgemäßen Verfahren ausgehend von am Markt verfügbaren Ausgangsstoffen in einem einstufigen Verfahren ohne Einsatz von Lösungsmittel zugänglich. Der in sonstigen Verfahren zur Herstellung von Präkompositpartikeln übliche Schritt der Sprühtrocknung mit dem damit verbundenen Einsatz an Lösungsmitteln und Aufwand für die Reinigung von Sprühgasen kann somit entfallen.

Durch Carbonisierung der Präkompositpartikel können Si/C-Kompositpartikel erhalten werden, in denen die Siliciumpartikel und das Kohlenstoff-Additiv in eine amorphe Kohlenstoff-Matrix eingebettet sind.

Überraschenderweise können nach dem erfindungsgemäßen, lösungsmittelfreien Verfahren Präkompositpartikel zugänglich werden, die hinsichtlich Partikelgrößen den entsprechenden Sprühtrocknungsprodukten gleichen. Zudem sind die unterschiedlichen Komponenten in den Partikeln homogen verteilt. Ein Verkleben oder Versintern und damit eine Aggregierung unterschiedlicher Partikel trat überraschenderweise nicht auf. Dies war umso überraschender, da Polyacrylnitril auch Bindemitteleigenschaften hat. Deswegen war zu befürchten, dass die einzelnen Komponenten verkleben und Produkte erhalten werden, die für Anodenaktivmaterialien völlig unbrauchbar sind. Überraschenderweise trat diese Befürchtung beim erfindungsgemäßen Einsatz der erfindungsgemäßen Komponenten zur Herstellung der Präkompositpartikel und der Si/C-Kompositpartikel nicht ein.

Interessanterweise fallen die einzelnen Präkompositpartikel als lockere Agglomerate an, die sich beispielsweise mittels Ultraschallbehandlung wieder in ihre Einzelbestandteile separieren lassen, aber nach Carbonisieren Si/C-Kompositpartikel ergeben, die die gewünschte mechanische Stabilität aufweisen, und aus denen die Einzelkomponenten nicht mehr isoliert werden können.

Die hergestellten Si/C-Kompositpartikel weisen die für Anodenaktivmaterialien von Lithiumionen-Batterien geforderten Eigenschaften auf, wie Partikelgrößen und Partikelgrößenverteilungen. Aufwändiges Mahlen und Sieben kann unterbleiben.

Die nachfolgenden Beispiele dienen zur weiteren Erläuterung der Erfindung.

Folgende analytische Methoden und Geräte wurden zur Charakterisierung der erhaltenen Si/C-Komposite eingesetzt:
Rasterelektronemikroskopie (REM/EDX):
Die mikroskopischen Untersuchungen wurden mit einem Rasterelektronemikroskop Zeiss Ultra 55 und einem energiedispersivem Röntgenspektrometer INCA x-sight durchgeführt. Die Proben wurden vor der Untersuchung zur Verhinderung von Aufladungsphänomenen mit einem Baltec SCD500 Sputter-/Carbon-Coating mit Kohlenstoff bedampft. Die in den Figuren gezeigten Querschnitte der Si/C-Kompositpartikel wurden mit einem Ionencutter Leica TIC 3X bei 6 kV erzeugt.

Anorganische Analytik / Elementaranalyse:
Die in den Beispielen angegebenen C-Gehalte wurden mit einem Leco CS 230 Analysator ermittelt, zur Bestimmung von O- und gegebenenfalls N- bzw. H-Gehalten wurde ein Leco TCH-600 Analysator eingesetzt. Die qualitative und quantitative Bestimmung von anderen angegebenen Elementen in den Si/C-Kompositpartikeln wurden mittels ICP (inductively coupled plasma)-Emissionspektrometrie (Optima 7300 DV, Fa. Perkin Elmer) bestimmt. Die Proben wurden dazu in einer Mikrowelle (Microwave 3000, Fa. Anton Paar) sauer aufgeschlossen (HF/HNO₃) . Die ICP-OES-Bestimmung orientiert sich an der ISO 11885 "Wasserbeschaffenheit - Bestimmung von ausgewählten Elementen durch induktiv gekoppelte Plasma-Atom-Emissionsspektrometrie (ICP-OES) (ISO 11885:2007); Deutsche Fassung EN ISO 11885:2009", die zur Untersuchung saurer, wässriger Lösungen eingesetzt wird.

Partikelgrößenbestimmung:
Die Bestimmung der Partikelgrößenverteilung erfolgte im Rahmen dieser Erfindung nach ISO 13320 mittels statischer Laserstreuung mit einem Horiba LA 950. Dabei muss bei der Vorbereitung der Proben besondere Sorgfalt auf die Dispergierung der Partikel in der Messlösung aufgewendet werden, um statt Einzelpartikel nicht die Größe von Agglomeraten zu messen. Hierzu wurden die Si/C-Kompositpartikel in Ethanol dispergiert, und die Dispersion wurde vor der Messung 4 min in einem Hielscher Ultraschall-Laborgerät Modell UIS250v mit Sonotrode LS24d5 mit 250 W Ultraschall behandelt.

Sofern nicht anders angegeben, wurden die nachstehenden (Vergleichs)Beispiele in Umgebungsluft, bei 1013 mbar und 23 °C durchgeführt. Die folgenden Methoden fanden Einsatz in den Beispielen:
Carbonisierung:
Alle in den Beispielen durchgeführten Carbonisierungen wurden mit einem 1200 °C Drei-Zonen Rohrofen (TFZ 12/65/550/E301) der Fa. Carbolite GmbH unter Verwendung einer Kaskadenregelung inklusive eines Probenthermoelements Typ N durchgeführt. Die angegebenen Temperaturen beziehen sich auf die Innentemperatur des Rohrofens am Ort des Thermoelements. Das jeweils zu carbonisierende Ausgangsmaterial wurde in ein oder mehrere Verbrennungsschiffchen aus Quarzglas (QCS GmbH) eingewogen und in ein Arbeitsrohr aus Quarzglas eingebracht. Die für die Carbonisierungen verwendeten Einstellungen und Prozessparameter sind in den jeweiligen (Vergleichs)Beispielen angegeben.

Klassierung/Siebung:
Die nach der Carbonsierung erhaltenen Si/C-Kompositpartikel wurden durch Nasssiebung mit einer Siebmaschine AS 200 basic (Retsch GmbH) mit Wasser an Edelstahlsieben von Überkorn > 20 µm befreit. Das Kompositpulver wurde in Ethanol mittels Ultraschall (Hielscher UIS250V; Amplitude 80%, Cycle: 0,75; Dauer: 30 min) dispergiert (20% Feststoffgehalt) und auf den Siebturm mit einem Sieb (20 pm) aufgebracht. Die Siebung wurde mit einer unendlichen Zeitvorwahl und einer Amplitude von 50-70% bei durchlaufendem Wasserstrom durchgeführt. Die unten austretende, Komposit-haltige Suspension wurde über 200 nm-Nylonmembran filtriert, und der Filterrückstand im Vakuumtrockenschrank bei 100°C und 50-80 mbar bis zur Massenkonstanz getrocknet.

Folgende Materialien wurden aus kommerziellen Quellen bezogen bzw. selber hergestellt und ohne weitere Reinigung direkt eingesetzt:
getrocknetes Silicium-Nanopulver (splitterförmige, nicht-aggregierte Si-Partikel selbst hergestellt durch Nassmahlung in einer Rührwerkskugelmühle in 2-Propanol (Feststoffgehalt 15,7 Gew.%, D₅₀ = 200 nm)), Polyacrylnitril (H-PAN; Mw = 200.000; D₅₀ = 48 µm; Fa. Dolan), Leitruß (Super P, Fa. Imerys/Timcal), Graphit (KS6L, Fa. Imerys), Aktivkohle (Contarbon, Fa. Donau-Carbon, vermahlen auf D₅₀=5µm), Pech (hochschmelzend; Erweichungspunkt 235 °C), Polyvinylchlorid (PVC) (Fa. Sigma-Aldrich, Art-Nr. 389293); Polyvinylacetat-Dispersion (Vinnapas EAF380; Fa. Wacker Chemie AG).

### Beispiel 1:

Polyacrylnitril-basiertes Si/C-Komposit mit Leitruß als C-Additiv:
5,4 g Polyacrylnitril-Pulver (PAN), 5,4 g Leitruß und 6,0 g trockenes Silicium-Nanopulver (D50: 200 nm) wurden zusammen mit 3 Zirkonoxid-Kugeln (20 mm Durchmesser) in einem Polypropylenbecher (125 ml) gegeben, und der Inhalt des Bechers wurde auf einem Labor-Rollenmischer (Typ SRT6D, Fa. Stuart) bei 125 rpm innerhalb von 14 h durchmischt.

Es wurde ein Si/Leitruß/PAN-Pulvermischung in Form von Agglomeraten erhalten.

Durch Einwirken von Ultraschall lässt sich das Agglomerat wieder trennen und man erhält die bimodale Partikelgrößenverteilung, die den Ausgangskomponenten zuzuordnen ist.

13,7 g der Si/Leitruß/PAN-Pulvermischung in Form von Agglomeraten wurden in ein Quarzglasschiffchen (QCS GmbH) gegeben und in einem Drei-Zonen-Rohrofen (TFZ 12/65/550/E301; Fa. Carbolite) unter Verwendung einer Kaskadenregelung inklusive eines Probenelements Typ N mit Formiergas (95% N₂, 5% H₂) als Inertgas carbonisiert: zuerst Heizrate 10 °C/min, Temperatur 300 °C, Haltedauer 90 min, N_{2/}H₂-Flussrate 200 ml/min; danach direkt weiter mit Heizrate 10 °C/min, Temperatur 1000 °C, Haltedauer 3 h, N_{2/}H₂-Flussrate 200 ml/min. Nach dem Abkühlen wurden 11,2 g eines schwarzen Pulvers erhalten (82% Ausbeute bezogen auf Einwaage), wovon 11,0 g durch Siebung von Überkorn > 20 µm befreit wurde.

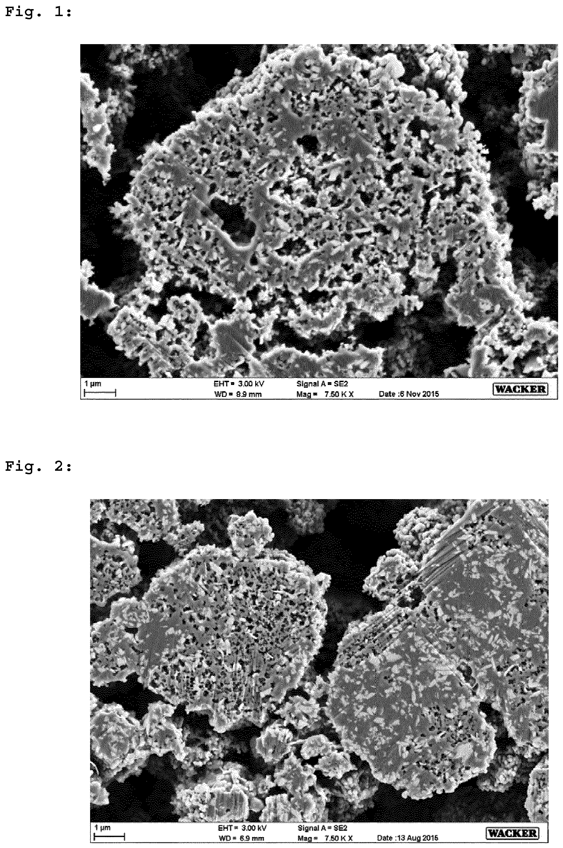

Es wurden 10,2 g eines schwarzen Pulvers < 20 µm (Aggregationsgrad 7%) erhalten, das laut REM-Analytik (Fig. 1) aus nicht-aggregierten, mikroskaligen Si/C-Komposit-Partikeln bestand, die im Inneren Leitruß- und Nano-Si-Partikel enthielten und eine monomodale Partikelgrößenverteilung aufwiesen.

Elementare Zusammensetzung: Si 41,6 Gew.-%; C 53,2 Gew.-%; O 3,15 Gew.-%; N 2,31 Gew.-%;
Partikelgrößenverteilung: Monomodal; D10: 0,56 µm; D50: 1,35 µm; D90: 3,99 µm; (D90-D10)/D50 = 2,54.

### Beispiel 2:

Polyacrylnitril-basiertes Si/C-Komposit mit Graphit als C-Additiv:
3,2 g Polyacrylnitril-Pulver (PAN), 3,2 g Graphit und 3,6 g trockenes Silicium-Nanopulver (D50: 200 nm) wurden zusammen mit 3 Zirkonoxid-Kugeln (20 mm Durchmesser) in einem Polypropylenbecher (125 ml) gegeben, und der Inhalt des Bechers wurde auf einem Labor-Rollenmischer (Typ SRT6D, Fa. Stuart) bei 125 rpm innerhalb von 14 h durchmischt.

9,1 g der so erhaltenen Si/Graphit/PAN-Pulvermischung wurden in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenelements Typ N mit Formiergas (95% N₂, 5% H₂) als Inertgas carbonisiert: zuerst Heizrate 10 °C/min, Temperatur 300 °C, Haltedauer 90 min, N_{2/}H₂-Flussrate 200 ml/min; danach direkt weiter mit Heizrate 10 °C/min, Temperatur 1000 °C, Haltedauer 3 h, N₂/H₂-Flussrate 200 ml/min. Nach dem Abkühlen wurden 7,2 g eines schwarzen Pulvers erhalten (80% Ausbeute bezogen auf Einwaage), wovon 6,9 g durch Siebung von Überkorn > 20 µm befreit wurde. Es wurden 6,3 g eines schwarzen Pulvers < 20 µm (Aggregationsgrad 9%) erhalten, das laut REM-Analytik aus nicht-aggregierten, mikroskaligen Si/C-Komposit-Partikeln bestand, die im Inneren Graphit- und Nano-Si-Partikel enthielten.

Elementare Zusammensetzung: Si 45,0 Gew.-%; C 51,9 Gew.-%; O 3,58 Gew.-%; N 1,73 Gew.-%;
Partikelgrößenverteilung: Bimodal; D10: 0,79 µm; D50: 3,89 µm; D90: 7,12 µm; (D90-D10)/D50 = 1,63.

### Beispiel 3:

Polyacrylnitril-basiertes Si/C-Komposit mit Aktivkohle als C-Additiv:
5,4 g Polyacrylnitril-Pulver (PAN), 5,4 g Aktivkohle und 6,0 g trockenes Silicium-Nanopulver (D50: 200 nm) wurden zusammen mit 3 Zirkonoxid-Kugeln (20 mm Durchmesser) in einem Polypropylenbecher (125 ml) gegeben, und der Inhalt des Bechers wurde auf einem Labor-Rollenmischer (Typ SRT6D, Fa. Stuart) bei 125 rpm innerhalb von 14 h durchmischt.

16,2 g der so erhaltenen Si/Aktivkohle/PAN-Pulvermischung wurden in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenelements Typ N mit Formiergas (95% N₂, 5% H₂) als Inertgas carbonisiert: zuerst Heizrate 10 °C/min, Temperatur 300 °C, Haltedauer 90 min, N_{2/}H₂-Flussrate 200 ml/min; danach direkt weiter mit Heizrate 10 °C/min, Temperatur 1000 °C, Haltedauer 3 h, N₂/H₂-Flussrate 200 ml/min. Nach dem Abkühlen wurden 13,4 g eines schwarzen Pulvers erhalten (83 % Ausbeute bezogen auf Einwaage), wovon 13,3 g durch Siebung von Überkorn > 20 µm befreit wurde.

Es wurden 12,9 g eines schwarzen Pulvers < 20 µm (Aggregationsgrad 3%) erhalten, das laut REM-Analytik aus nicht-aggregierten, mikroskaligen Si/C-Komposit-Partikeln bestand, die im Inneren Aktivkohle- und Nano-Si-Partikel enthielten.

Elementare Zusammensetzung: Si 38,0 Gew.-%; C 49,3 Gew.-%; O 7,8 Gew.-%; N 3,18 Gew.-%;
Partikelgrößenverteilung: Bimodal; D10: 0,61 µm; D50: 2,64 µm; D90: 8,27 µm; (D90-D10)/D50 = 2,90.

### Vergleichsbeispiel 4:

Pech-basiertes Si/C-Komposit mit Leitruß als C-Additiv:
3,2 g Pech, 3,2 g Leitruß und 3,6 g trockenes Silicium-Nanopulver (D50: 200 nm) wurden zusammen mit 3 Zirkonoxid-Kugeln (20 mm Durchmesser) in einem Polypropylenbecher (125 ml) gegeben, und der Inhalt des Bechers wurde auf einem Labor-Rollenmischer (Typ SRT6D, Fa. Stuart) bei 125 rpm innerhalb von 14 h durchmischt.

10,1 g der so erhaltenen Si/Leitruß/Pech-Pulvermischung wurden in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenelements Typ N mit Formiergas (95% N₂, 5% H₂) als Inertgas carbonisiert: zuerst Heizrate 10 °C/min, Temperatur 300 °C, Haltedauer 90 min, N_{2/}H₂-Flussrate 200 ml/min; danach direkt weiter mit Heizrate 10 °C/min, Temperatur 1000 °C, Haltedauer 3 h, N₂/H₂-Flussrate 200 ml/min. Nach dem Abkühlen wurden 8,7 g eines schwarzen Pulvers erhalten (86 % Ausbeute bezogen auf Einwaage), wovon 8,7 g durch Siebung von Überkorn > 20 µm befreit wurde.

Es wurden 5,3 g eines schwarzen Pulvers < 20 µm (Aggregationsgrad 39%) erhalten.

Elementare Zusammensetzung: Si 36,6 Gew.-%; C 60,1 Gew.-%; O 3,36 Gew.-%; N 0,5 Gew.-%;
Partikelgrößenverteilung: Bimodal; D10: 1,75 µm; D50: 5,57 µm; D90: 10,76 µm; (D90-D10)/D50 = 1,61.

### Vergleichsbeispiel 5:

Polyvinylchlorid-basiertes Si/C-Komposit mit Leitruß als C-Additiv:
3,2 g Polyvinylchlorid (PVC), 3,2 g Leitruß und 3,6 g trockenes Silicium-Nanopulver (D50: 200 nm) wurden zusammen mit 3 Zirkonoxid-Kugeln (20 mm Durchmesser) in einem Polypropylenbecher (125 ml) gegeben, und der Inhalt des Bechers wurde auf einem Labor-Rollenmischer (Typ SRT6D, Fa. Stuart) bei 125 rpm innerhalb von 14 h durchmischt.

10,0 g der so erhaltenen Si/Leitruß/PVC-Pulvermischung wurden in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenelements Typ N mit Formiergas (95% N₂, 5% H₂) als Inertgas carbonisiert: zuerst Heizrate 10 °C/min, Temperatur 300 °C, Haltedauer 90 min, N_{2/}H₂-Flussrate 200 ml/min; danach direkt weiter mit Heizrate 10 °C/min, Temperatur 1000 °C, Haltedauer 3 h, N₂/H₂-Flussrate 200 ml/min. Nach dem Abkühlen wurden 7,2 g eines schwarzen Pulvers erhalten (72 % Ausbeute bezogen auf Einwaage), wovon 7,1 g durch Siebung von Überkorn > 20 µm befreit wurde.

Es wurden 6,3 g eines schwarzen Pulvers < 20 µm (Aggregationsgrad 11%) erhalten.

Elementare Zusammensetzung: Si 45,3 Gew.-%; C 51,2 Gew.-%; O 3,24 Gew.-%; N 0,25 Gew.-%;
Partikelgrößenverteilung: Monomodal; D10: 0,57 µm; D50: 2,17 µm; D90: 8,65 µm; (D90-D10)/D50 = 3,72.

### Vergleichsbeispiel 6:

Lösungsmittel-basierte Herstellung von nicht-aggregierten, C-Mikrosphären enthaltend Leitruß und Nano-Si über Sprühtrocknung:
10,8 g Polyacrylnitril (PAN) wurden bei Raumtemperatur in 720 ml Dimethylformamid (DMF) gelöst. 12,6 g einer Silicium-Nanopulver-Suspension (19,8% in Isopropanol; entspricht 2,55 g Nano-Si) und 3,15 g Leitruß (Super P) wurden mittels Ultraschall in die PAN-Lösung dispergiert (Hielscher UIS250V;
Amplitude 80%, Cycle: 0,9; Dauer: 30 min). Die resultierende Dispersion wurde mit einem Laborsprühtrockner vom Typ B-290 (BÜCHI GmbH) mit Inertloop B-295 und Entfeuchter B-296 (BÜCHI GmbH) versprüht und getrocknet (Düsenspitze 0,7 mm; Düsenkappe 1,4 mm; Düsentemperatur 130 °C; N₂-Gasfluss ~30; Aspirator 100%; Pumpe 20%).

Es wurden 13,8 g eines braun-schwarzen Pulvers erhalten (84% Ausbeute).

13,7 g des so erhaltenen Si/Leitruß/PAN-Pulvers wurden in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenelements Typ N mit Argon/H₂ als Inertgas carbonisiert: Zuerst Heizrate 10 °C/min, Temperatur 300 °C, Haltedauer 90 min, Ar/H₂-Flussrate 200 ml/min; danach direkt weiter mit Heizrate 10 °C/min, Temperatur 1000 °C, Haltedauer 3 h, Ar/H₂-Flussrate 200 ml/min.

Nach dem Abkühlen wurden 7,71 g eines schwarzen Pulvers erhalten (56% Ausbeute bezogen auf Einwaage), das laut REM-Analytik (Fig. 2) aus nicht-aggregierten, mikroskaligen Kohlenstoff-Kugeln bestand, die im Inneren Leitruß- und Nano-Si-Partikel enthielten.

Elementare Zusammensetzung: Si 24,4 Gew.-%; C 65,6 Gew.-%; O 4,62 Gew.-%; N 2,67 Gew.-%; B <50 ppm; P <50 ppm; Al <25 ppm; Ca <50 ppm; Cu <10 ppm; K <50 ppm; Li<10 ppm; Zr 800 ppm; Partikelgrößenverteilung: Monomodal; D10: 4,15 µm; D50: 6,32 µm; D90: 9,54 µm; (D90-D10)/D50 = 0,85 (Fig. 2).

### Beispiel 7:

Poröses, Polyacrylnitril-basiertes Si/C-Komposit mit Leitruß als C-Additiv:
5 g Leitruß und 20 g Polyvinylacetat-Dispersion (PVAc) (51% in Wasser) wurden bei Raumtemperatur in 800 ml eines Ethanol-Wasser-Gemisches (1:1) mittels Ultraschall dispergiert (Hielscher UIS250V; Amplitude 80%, Cycle: 0,9; Dauer: 30 min). Die resultierende Dispersion wurde mit einem Laborsprühtrockner vom Typ B-290 (BÜCHI GmbH) mit Inertloop B-295 und Entfeuchter B-296 (BÜCHI GmbH) versprüht und getrocknet (Düsenspitze 0,7 mm; Düsenkappe 1,4 mm; Düsentemperatur 100 °C; N₂-Gasfluss: 30; Aspirator 100%; Pumpe 20%).

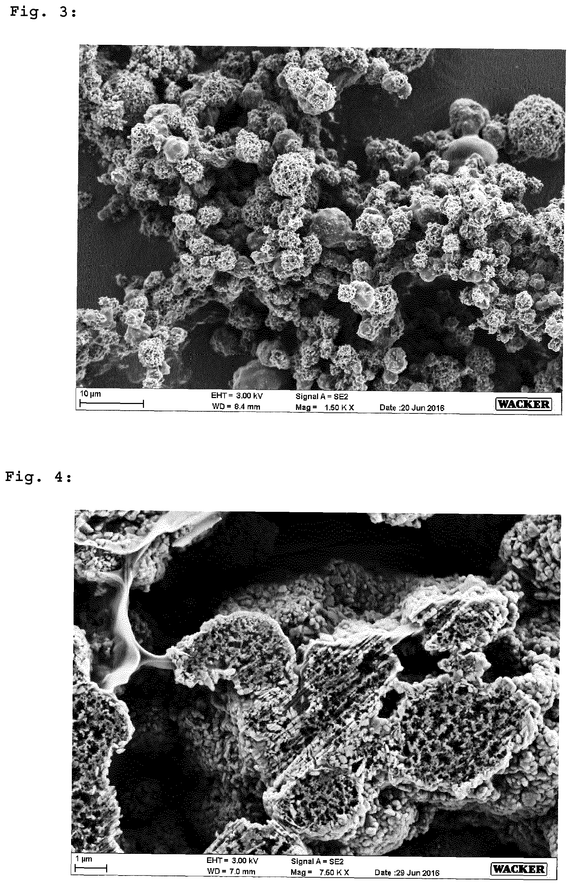

Es wurden 7,5 g eines schwarzen Pulvers erhalten, das laut REM-Analyse (Fig. 3) aus PVAc/Leitruß-Mikrosphären bestand.

7,3 g der so erhaltenen PVAc/Leitruß-Mikrosphären, 2,6 g Polyacrylnitril (PAN) und 1,9 g trockenes Silicium-Nanopulver (D50: 200 nm) wurden zusammen mit 3 Zirkonoxid-Kugeln (20 mm Durchmesser) in einem Polypropylenbecher (125 ml) gegeben, und der Inhalt des Bechers wurde auf einem Labor-Rollenmischer (Typ SRT6D, Fa. Stuart) bei 125 rpm innerhalb von 14 h durchmischt.

10,9 g der so erhaltenen Si/Leitruß/PVAc/PAN-Pulvermischung wurden in ein Quarzglasschiffchen (QCS GmbH) gegeben und in einem Drei-Zonen-Rohrofen (TFZ 12/65/550/E301; Carbolite GmbH) unter Verwendung einer Kaskadenregelung inklusive eines Probenelements Typ N mit Formiergas (95% N₂, 5% H₂) als Inertgas carbonisiert: zuerst Heizrate 10 °C/min, Temperatur 300 °C, Haltedauer 90 min, N_{2/}H₂-Flussrate 200 ml/min; danach direkt weiter mit Heizrate 10 °C/min, Temperatur 1000 °C, Haltedauer 3 h, N_{2/}H₂-Flussrate 200 ml/min. Nach dem Abkühlen wurden 5,3 g eines schwarzen Pulvers erhalten (49 % Ausbeute bezogen auf Einwaage), wovon 3,6 g durch Siebung von Überkorn > 20 µm befreit wurde.

Es wurden 3,3 g eines schwarzen Pulvers < 20 µm (Aggregationsgrad 8%) erhalten, das laut REM-Analytik (Fig. 4) aus nicht-aggregierten, mikroskaligen, porösen Si/C-Komposit-Partikeln bestand, die im Inneren Leitruß- und Nano-Si-Partikel enthielten.

Die so erhaltenen Si/C-Komposit-Partikel zeichneten sich im Inneren der Partikel durch eine erhöhte Porosität aus. Elementare Zusammensetzung: Si 32,2 Gew.-%; C 61,2 Gew.-%; O 4,77 Gew.-%; N 1,64 Gew.-%;
Partikelgrößenverteilung: Monomodal; D10: 3,85 µm; D50: 6,24 µm; D90: 9,95 µm; (D90-D10)/D50 = 0,98.

## Patentansprüche

1. Verfahren zur Herstellung von Präkompositpartikeln, indem Siliciumpartikel,
Polyacrylnitril und
ein oder mehrere Kohlenstoff-Additive ausgewählt aus der Gruppe umfassend Graphit, Fulleren, Kohlenstoff-Fasern, Glaskohlenstoff, Graphen, Aktivkohle, Ruße, Kohlenstoffnanoröhren, Kohlenstoffnanoschäume und Aerographit,
gegebenenfalls ein oder mehrere organische Porenbildner und gegebenenfalls ein oder mehrere anorganische Zusatzstoffe, je in Form eines Pulvers, gemischt werden, wobei vor und während des Mischens kein Lösungsmittel zugegeben wird, und
die anorganischen Zusatzstoffe ausgewählt werden aus der Gruppe umfassend Halogenide der Alkali- und Erdalkalimetalle, Carbonate der Alkalimetalle, Zinkoxid, Magnesiumcarbonat und Nickelsulfid,
wobei das Polyacrylnitril, die Siliciumpartikel und/oder die Kohlenstoff-Additive ganz oder teilweise vor dem Mischen vorgelegt oder ganz oder teilweise während des Mischens zudosiert werden,
mit der Maßgabe, dass ohne Polyacrylnitril in der Vorlage die Siliciumpartikel und/oder die Kohlenstoff-Additive zumindest anteilig gemeinsam mit Polyacrylnitril oder nach Zugabe von Polyacrylnitril zudosiert werden.

2. Verfahren zur Herstellung von Präkompositpartikeln gemäß Anspruch 1, **dadurch gekennzeichnet, dass** Präkompositpartikel in Form von Agglomeraten vorliegen basierend auf Siliciumpartikeln, Kohlenstoff-Additiven und Polyacrylnitril sowie gegebenenfalls organischen Porenbildnern und gegebenenfalls anorganischen Zusatzstoffen.

3. Verfahren zur Herstellung von Präkompositpartikeln gemäß Anspruch 1 oder 2, **dadurch gekennzeichnet, dass** die Präkompositpartikel zu ≥ 5 Gew.% und ≤ 60 Gew.% auf Polyacrylnitril basieren, bezogen auf das Gesamtgewicht der Präkompositpartikel.

4. Verfahren zur Herstellung von Präkompositpartikeln gemäß Anspruch 1 bis 3, **dadurch gekennzeichnet, dass** ein oder mehrere Kohlenstoff-Additive ausgewählt werden aus der Gruppe umfassend Graphit, Ruß, Aktivkohle, Carbon Nanotubes, Fullerene und Graphen.

5. Verfahren zur Herstellung von Präkompositpartikeln gemäß Anspruch 1 bis 4, **dadurch gekennzeichnet, dass** das Gewichtsverhältnis aus Polyacrylnitril und Kohlenstoff-Additiven ≥ 0,1 und ≤ 20 ist.

6. Verfahren zur Herstellung von Präkompositpartikeln gemäß Anspruch 1 bis 5, **dadurch gekennzeichnet, dass** das Gewichtsverhältnis aus Siliciumpartikeln und Kohlenstoff-Additiven ≥ 0,1 und ≤ 4 ist.

7. Verfahren zur Herstellung von Präkompositpartikeln gemäß Anspruch 1 bis 6, **dadurch gekennzeichnet, dass** Polyacrylnitril teilweise oder vollständig vor dem Mischen vorgelegt wird.

8. Verfahren zur Herstellung von Präkompositpartikeln gemäß Anspruch 1 bis 7, **dadurch gekennzeichnet, dass** Polyacrylnitril zu ≥ 40 Gew.-% vorgelegt wird, bezogen auf das Gesamtgewicht des insgesamt eingesetzten Polyacrylnitrils.

9. Verfahren zur Herstellung von Präkompositpartikeln gemäß Anspruch 1 bis 6, **dadurch gekennzeichnet, dass** Polyacrylnitril teilweise oder vollständig zudosiert wird, mit der Maßgabe, dass die insgesamt eingesetzte Menge an Siliciumpartikeln und/oder Kohlenstoff-Additiven oder ein Anteil davon gleichzeitig mit Polyacrylnitril zudosiert oder nach der vollständigen Zugabe von Polyacrylnitril zudosiert wird.

10. Verfahren zur Herstellung von Präkompositpartikeln gemäß Anspruch 1 bis 6, **dadurch gekennzeichnet, dass** nach vollständiger Zugabe der Siliciumpartikel und der Kohlenstoff-Additive kein Polyacrylnitril mehr zudosiert wird.

## Claims

1. Method for producing precomposite particles, by mixing silicon particles,
polyacrylonitrile, and
one or more carbon additives selected from the group encompassing graphite, fullerene, carbon fibers, glassy carbon, graphene, activated carbon, carbon blacks, carbon nanotubes, carbon nanofoams, and aerographite,
optionally one or more organic pore formers, and optionally one or more inorganic adjuvants, each in the form of a powder, where
before and during the mixing no solvent is added, and the inorganic adjuvants are selected from the group encompassing halides of the alkali metals and alkaline earth metals, carbonates of the alkali metals, zinc oxide, magnesium carbonate, and nickel sulfide,
where the polyacrylonitrile, the silicon particles and/or the carbon additives are entirely or partially initially introduced before the mixing or entirely or partially metered in during the mixing,
with the proviso that without polyacrylonitrile in the initial charge, the silicon particles and/or the carbon additives are metered in at least proportionately together with polyacrylonitrile or after addition of polyacrylonitrile.

2. Method for producing precomposite particles according to Claim 1, **characterized in that** precomposite particles are in the form of agglomerates based on silicon particles, carbon additives, and polyacrylonitrile and also optionally organic pore formers and optionally inorganic adjuvants.

3. Method for producing precomposite particles according to Claim 1 or 2, **characterized in that** the precomposite particles are based at ≥ 5 wt% and ≤ 60 wt% on polyacrylonitrile, based on the total weight of the precomposite particles.

4. Method for producing precomposite particles according to Claim 1 to 3, **characterized in that** one or more carbon additives are selected from the group encompassing graphite, carbon black, activated carbon, carbon nanotubes, fullerenes and graphene.

5. Method for producing precomposite particles according to Claim 1 to 4, **characterized in that** the weight ratio of polyacrylonitrile to carbon additives is ≥ 0.1 and ≤ 20.

6. Method for producing precomposite particles according to Claim 1 to 5, **characterized in that** the weight ratio of silicon particles to carbon additives is ≥ 0.1 and ≤ 4.

7. Method for producing precomposite particles according to Claim 1 to 6, **characterized in that** polyacrylonitrile is partially or completely initially introduced before the mixing.

8. Method for producing precomposite particles according to Claim 1 to 7, **characterized in that** polyacrylonitrile is initially introduced at ≥ 40 wt%, based on the total weight of the polyacrylonitrile employed overall.

9. Method for producing precomposite particles according to Claim 1 to 6, **characterized in that** polyacrylonitrile is partially or completely metered in, with the proviso that the amount of silicon particles and/or carbon additives employed overall, or a proportion thereof, is metered in simultaneously with polyacrylonitrile or is metered in after the complete addition of polyacrylonitrile.

10. Method for producing precomposite particles according to Claim 1 to 6, **characterized in that** after complete addition of the silicon particles and of the carbon additives, no further polyacrylonitrile is metered in.

## Revendications

1. Procédé pour la préparation de particules pré-composites, dans lequel des particules de silicium, un polyacrylonitrile et un ou plusieurs additifs de carbone choisis dans le groupe comprenant un graphite, un fullerène, des fibres de carbone, du carbone vitreux, un graphène, un charbon actif, des suies, des nanotubes de carbone, des nanomousses de carbone et un aérographite, éventuellement un ou plusieurs agents porogènes organiques et éventuellement un ou plusieurs adjuvants inorganiques, chacun sous la forme d'une poudre, sont mélangés, aucun solvant n'étant ajouté avant et pendant le mélange, et
les adjuvants inorganiques étant choisis dans le groupe comprenant des halogénures de métaux alcalins et de métaux alcalino-terreux, des carbonates de métaux alcalins, l'oxyde de zinc, le carbonate de magnésium et le sulfure de nickel,
le polyacrylonitrile, les particules de silicium et/ou les additifs de carbone étant chargés totalement ou partiellement avant le mélange ou étant ajoutés totalement ou partiellement pendant le mélange,
à la condition que, sans polyacrylonitrile dans la charge, les particules de silicium et/ou les additifs de carbone sont ajouté(e)s au moins partiellement ensemble avec le polyacrylonitrile ou après l'ajout du polyacrylonitrile.

2. Procédé pour la préparation de particules pré-composites selon la revendication 1, **caractérisé en ce que** des particules pré-composites sont présentes sous forme d'agglomérats à base de particules de silicium, d'additifs de carbone et de polyacrylonitrile ainsi qu'éventuellement d'agents porogènes organiques et éventuellement d'adjuvants inorganiques.

3. Procédé pour la préparation de particules pré-composites selon la revendication 1 ou 2, **caractérisé en ce que** les particules pré-composites sont composées de ≥ 5 % en poids et ≤ 60 % en poids de polyacrylonitrile, par rapport au poids total des particules pré-composites.

4. Procédé pour la préparation de particules pré-composites selon les revendications 1 à 3, **caractérisé en ce qu'**un ou plusieurs additifs de carbone sont choisis dans le groupe comprenant un graphite, une suie, un charbon actif, des nanotubes de carbone, des fullerènes et un graphène.

5. Procédé pour la préparation de particules pré-composites selon les revendications 1 à 4, **caractérisé en ce que** le rapport en poids de polyacrylonitrile et d'additifs de carbone est ≥ 0,1 et ≤ 20.

6. Procédé pour la préparation de particules pré-composites selon les revendications 1 à 5, **caractérisé en ce que** le rapport en poids de particules de silicium et d'additifs de carbone est ≥ 0,1 et ≤ 4.

7. Procédé pour la préparation de particules pré-composites selon les revendications 1 à 6, **caractérisé en ce que** le polyacrylonitrile est chargé partiellement ou totalement avant le mélange.

8. Procédé pour la préparation de particules pré-composites selon les revendications 1 à 7, **caractérisé en ce que** ≥ 40 % en poids de polyacrylonitrile est chargé, par rapport au poids total du polyacrylonitrile utilisé au total.

9. Procédé pour la préparation de particules pré-composites selon les revendications 1 à 6, **caractérisé en ce que** le polyacrylonitrile est ajouté partiellement ou totalement, à la condition que la quantité totale utilisée de particules de silicium et/ou d'additifs de carbone ou une partie de celle-ci soit ajoutée simultanément avec le polyacrylonitrile ou ajoutée après l'ajout complet du polyacrylonitrile.

10. Procédé pour la préparation de particules pré-composites selon les revendications 1 à 6, **caractérisé en ce qu'**après l'ajout complet des particules de silicium et des additifs de carbone, aucun polyacrylonitrile n'est plus ajouté.
